# EUROPÄISCHE PATENTSCHRIFT

(11) **EP 3 188 947 B1**
(45) Veröffentlichungstag und Bekanntmachung des Hinweises auf die Patenterteilung: **23.05.2018**
(21) Anmeldenummer: 15763881.8
(22) Anmeldetag: 11.09.2015
(51) Int. Cl.: B60W 50/02, B60W 20/00

(54) **VERFAHREN UND STEUERVORRICHTUNG ZUM ERKENNEN EINES VERBRENNUNGSVORGANGS EINER VERBRENNUNGSKRAFTMASCHINE EINES HYBRIDFAHRZEUGS**
METHOD AND CONTROLLER FOR RECOGNIZING A COMBUSTION PROCESS IN AN INTERNAL COMBUSTION ENGINE OF A HYBRID VEHICLE
PROCÉDÉ ET DISPOSITIF DE COMMANDE SERVANT À DÉTECTER UN PROCESSUS DE COMBUSTION D'UN MOTEUR À COMBUSTION INTERNE D'UN VÉHICULE HYBRIDE

(30) Priorität: 21.10.2014 DE 102014221293
(43) Veröffentlichungstag der Anmeldung: 12.07.2017
(73) Patentinhaber: Volkswagen Aktiengesellschaft, 38440 Wolfsburg (DE)
(72) Erfinder: WEISS, Norbert, 38173 Sickte (DE); PIASECKI, Christian, 38106 Braunschweig (DE); TREBESIUS, Samuel, 29399 Wahrenholz (DE); FREIWALD, Grit, 38518 Gifhorn (DE); THAUER, Florian, 38518 Gifhorn (DE)
(86) Internationale Anmeldenummer: PCT/EP2015/070782
(87) Internationale Veröffentlichungsnummer: WO 2016/062453

(56) Entgegenhaltungen:
- EP-A1- 0 437 057
- WO-A1-92/09874
- DE-A1-102012 219 466

## Beschreibung

Die Erfindung betrifft ein Verfahren und eine Steuervorrichtung zum Erkennen eines Verbrennungsvorgangs einer Verbrennungskraftmaschine eines Hybridfahrzeugs.

Hybridfahrzeuge zeichnen sich durch zwei verschiedenartige Antriebssysteme aus, die situationsabhängig gleichzeitig, also hybridisch, oder unabhängig voneinander betrieben werden können. Häufig enthalten Hybridfahrzeuge eine Verbrennungskraftmaschine und einen Elektroantrieb als Antriebssysteme.

Falls die Verbrennungskraftmaschine kein oder nur ein nicht ausreichendes Moment stellen kann, z.B. im Fehlerfall, bei Falschbetankung oder dergleichen, kann es vorkommen, dass während des gleichzeitigen Betriebs der Verbrennungskraftmaschine und des Elektroantriebs, d.h. im Betriebsmodus "Hybridisch fahren", der Elektroantrieb die Verbrennungskraftmaschine "mitschleppt". Der Fahrer bekommt in diesem Fall ein Drehzahlsignal von der Verbrennungskraftmaschine angezeigt und geht davon aus, dass diese ordnungsgemäß funktioniert. Durch das Mitschleppen der Verbrennungskraftmaschine durch den Elektroantrieb wird die Batterie schnell leergefahren, was zu einem Liegenbleiben des Fahrzeugs führen kann. Falls während des unbeabsichtigten Mitschleppens der Verbrennungskraftmaschine Kraftstoff eingespritzt wird, wird dieser nicht verbrannt und kann sich im Abgastrakt, beispielsweise in einem Katalysator, ansammeln und diesen durch eine mögliche spätere Entzündung beschädigen.

Im Stand der Technik werden verschiedene Möglichkeiten der Überwachung der Verbrennung in einer Verbrennungskraftmaschine und der Erkennung eines Ausfalls der Verbrennungskraftmaschine beschrieben. So schlägt beispielsweise die DE 10 2005 040 780 A1 vor, eine Ansteuergröße entsprechend einem Sollmoment einzustellen, ein Istmoment zu messen und aus dem Vergleich des Sollmoments mit dem Istmoment einen fehlerhaften Betrieb der Verbrennungskraftmaschine zu erkennen. Bei diesem Verfahren bedarf es jedoch einer Vorrichtung zum Messen des Istmoments.

Die DE 10 2008 042 307 A1 beschreibt, die Drehzahl einer Verbrennungskraftmaschine und die Drehzahl eines Elektroantriebs eines Hybridfahrzeugs zu messen und durch einen Vergleich der Drehzahlen einen fehlerhaften Betrieb der Verbrennungskraftmaschine zu erkennen. Weitere Überwachungsmöglichkeiten einer Verbrennungskraftmaschine in einem Hybridfahrzeug werden in der EP 1 914 101 A2 und WO 2013/136159 A1 offenbart.
In der DE 10 2012 219 466 A1 ist ein Verfahren zum Erkennen einer stabilen Verbrennung einer Verbrennungskraftmaschine, insbesondere in einem Hybridfahrzeug, beschrieben. Während des Startvorgangs und des Betriebes einer geschleppten Verbrennungskraftmaschine wird ein Signal eines Kurbelwellendrehzahlgebers überwacht und durch die Merkmale dieses Signals, die eine Drehungleichförmigkeit der Verbrennungskraftmaschine charakterisieren, auf das Vorhandensein einer stabilen Verbrennung geschlossen. In einzelnen Ausführungsformen wird dazu die Drehzahlamplitude, der Betrag des Gradienten der Drehzahl beziehungsweise der Zeitgradient in Kompressions- und Arbeitstakt bestimmt.
Die WO 92/09874 A1 betrifft das Erkennen einer irregulären Verbrennung in einer Verbrennungskraftmaschine, indem für jeden Zylinder die Drehzahl an zwei Kurbelwellenstellungen eines Zylinders erfasst, daraus eine Steigung des Drehzahlverlaufs bestimmt und die bestimmte Steigung mit einem Grenzwert verglichen wird. Bei Unterschreitung des Grenzwerts wird auf eine irreguläre Verbrennung geschlossen.
Im Dokument EP 0 437 057 A1 werden ein Verfahren und eine Vorrichtung zur Erkennen von Verbrennungsbedingungen in Zylindern einer Verbrennungskraftmaschine beschrieben. Gemessene Rotationsgeschwindigkeiten werden im Hinblick auf Variationen ausgewertet. Dazu wird in einer bevorzugten Ausführungsform der Betrag der Änderung des Kurvenverlaufs betrachtet.
Aufgabe der vorliegenden Erfindung ist es, ein Verfahren und eine Steuervorrichtung zum Erkennen eines Verbrennungsvorgangs einer Verbrennungskraftmaschine eines Hybridfahrzeugs bereitzustellen, die die oben genannten Nachteile wenigstens teilweise überwinden.
Diese Aufgabe wird durch das erfindungsgemäße Verfahren zum Erkennen eines Verbrennungsvorgangs einer Verbrennungskraftmaschine eines Hybridfahrzeugs nach Anspruch 1 und die Steuervorrichtung zum Erkennen eines Verbrennungsvorgangs einer Verbrennungskraftmaschine eines Hybridfahrzeugs nach Anspruch 9 gelöst.

Gemäß einem Aspekt betrifft die vorliegende Erfindung ein Verfahren zum Erkennen eines Verbrennungsvorgangs einer Verbrennungskraftmaschine eines Hybridfahrzeugs, die eine Kurbelwelle aufweist, umfassend:
Erhalten eines Drehzahlsignals, das eine Drehzahl der Kurbelwelle repräsentiert;
Erhalten eines Kurbelwellenwinkelsignals, das einen Kurbelwellenwinkel der Kurbelwelle repräsentiert; und
Ermitteln auf Grundlage des Drehzahlsignals und des Kurbelwellenwinkelsignals, ob in der Verbrennungskraftmaschine eine Verbrennung stattfindet.

Gemäß einem weiteren Aspekt betrifft die vorliegende Erfindung eine Steuervorrichtung zum Erkennen eines Verbrennungsvorgangs einer Verbrennungskraftmaschine eines Hybridfahrzeugs, die eine Kurbelwelle aufweist, wobei die Steuervorrichtung dazu ausgebildet ist, ein Verfahren nach dem vorherigen Aspekt durchzuführen.

Weitere vorteilhafte Ausgestaltungen der Erfindung ergeben sich aus den Unteransprüchen und der folgenden Beschreibung bevorzugter Ausführungsbeispiele der vorliegenden Erfindung.

Die vorliegende Erfindung betrifft ein Verfahren zum Erkennen eines Verbrennungsvorgangs einer Verbrennungskraftmaschine eines Hybridfahrzeugs, wobei die Verbrennungskraftmaschine eine Kurbelwelle aufweist. Das Hybridfahrzeug kann neben der Verbrennungskraftmaschine eine zusätzliche Antriebsvorrichtung, beispielsweise einen Elektroantrieb oder einen Gasantrieb, aufweisen. Die Verbrennungskraftmaschine und die zusätzliche Antriebsvorrichtung sind vorzugsweise über eine Trennkupplung miteinander koppelbar, um das Hybridfahrzeug hybridisch, d.h. gleichzeitig mit der Verbrennungskraftmaschine und der zusätzlichen Antriebsvorrichtung, anzutreiben.

Gemäß dem erfindungsgemäßen Verfahren werden ein Drehzahlsignal, das eine Drehzahl der Kurbelwelle repräsentiert, und ein Kurbelwellenwinkelsignal, das einen Kurbelwellenwinkel der Kurbelwelle repräsentiert, erhalten. Das Drehzahlsignal und/oder das Kurbelwellenwinkelsignal sind vorzugsweise hochaufgelöste Signale, beispielsweise oszillierende hochaufgelöste Signale. Auf Grundlage des Drehzahlsignals und des Kurbelwellenwinkelsignals wird dann ermittelt, ob in der Verbrennungskraftmaschine eine Verbrennung stattfindet.

Die Ermittlung, ob eine Verbrennung stattfindet, auf Grundlage des Drehzahlsignals und des Kurbelwellenwinkelsignals ist möglich, da ein Drehzahlsignal einer Verbrennungskraftmaschine, die selbstständig läuft, gegenüber einem Drehzahlsignal einer Verbrennungskraftmaschine, die mitgeschleppt wird, phasenverschoben ist. Im Falle der mitgeschleppten Verbrennungskraftmaschine erreicht ein Zylinderkolben der Verbrennungskraftmaschine einen oberen Totpunkt im Arbeitstakt an einem Drehzahlminimum. Im Falle der selbstständig laufenden Verbrennungskraftmaschine erreicht ein Zylinderkolben der Verbrennungskraftmaschine einen oberen Totpunkt im Arbeitstakt bereits vor einem Drehzahlminimum.

Eine Erklärung für diese Phasenverschiebung ist in der Drehmomentbilanz zu finden, in die das Drehmoment aus der Verbrennung, das Drehmoment aus der Expansion und Kompression der Luft im Zylinder, das Reib- und Verlustmoment und das Schleppmoment durch die zusätzliche Antriebsvorrichtung einfließt. Das Drehmoment der mitgeschleppten Verbrennungskraftmaschine entspricht im Wesentlichen dem Drehmoment aus der Expansion und Kompression, da das Drehmoment aus der Verbrennung null ist (es findet keine Verbrennung statt) und sich das Reib- und Verlustmoment und das Schleppmoment gegenseitig aufheben. Das Drehmoment aus der Expansion und Kompression weist eine Nullstelle auf, wenn sich ein Zylinderkolben an einem oberen Totpunkt im Arbeitstakt befindet. Im Gegensatz dazu ergibt sich das Drehmoment der selbstständig laufenden Verbrennungskraftmaschine aus dem Drehmoment aus der Verbrennung, dem Drehmoment aus der Expansion und Kompression und dem Reib- und Verlustmoment. Das Schleppmoment ist null. Das Drehmoment aus der Verbrennung und aus der Expansion und Kompression weist eine Nullstelle auf, wenn sich der Zylinderkolben an einem oberen Totpunkt im Arbeitstakt befindet. Aufgrund des Reib- und Verlustmoments kommt es jedoch zu einer Verschiebung der Nullstelle, so dass sich der Zylinderkolben schon vor dem Erreichen der Nullstelle an einem oberen Totpunkt im Arbeitstakt befindet. Da das Drehmoment proportional zur Winkelbeschleunigung ist und die Winkelbeschleunigung proportional zur zeitlichen Ableitung der Winkelgeschwindigkeit ist, ergibt sich für die Winkelgeschwindigkeit, die proportional zur Drehzahl ist, eine Verschiebung der Minima, die vergleichbar mit der Verschiebung der Nullstellen des Drehmoments ist. Auf ähnliche Weise lässt sich eine Phasenverschiebung des Kurbelwellenwinkels erklären, dessen zeitliche Ableitung die Winkelgeschwindigkeit ergibt, erklären.

Da üblicherweise in jedem Kraftfahrzeug ein Drehzahlsensor vorgesehen ist, um die Drehzahl und den Kurbelwellenwinkel der Kurbelwelle zu überwachen, kann das Signal dieses Drehzahlsensors dem erfindungsgemäßen Verfahren zugrunde gelegt werden. Das erfindungsgemäße Verfahren führt dazu, dass ohne den Verbau eines zusätzlichen Sensors, wie z.B. eines Temperatursensors oder eines Drucksensors, und ohne aktiven Eingriff, z.B. ohne eine Zündwinkelverstellung einzelner Zylinder, zeitnah erkannt werden kann, ob sich die Verbrennungskraftmaschine in einem selbstständigen Lauf befindet oder ob die Verbrennungskraftmaschine durch die zusätzliche Antriebsvorrichtung mitgeschleppt wird bzw. ob ein Ausfall der Verbrennungskraftmaschine vorliegt.

Das Verfahren zum Erkennen eines Verbrennungsvorgangs der Verbrennungskraftmaschine kann in unterschiedlichen Betriebszuständen der Verbrennungskraftmaschine durchgeführt werden. In manchen Ausführungsbeispielen kann das Verfahren sowohl im Leerlauf, als auch unter verschiedenen Lasten durchgeführt werden.

Falls bei der Ermittlung, ob eine Verbrennung stattfindet, festgestellt wird, dass die Verbrennungskraftmaschine mitgeschleppt wird, d.h. keine oder eine ungeeignete Verbrennung in der Verbrennungskraftmaschine stattfindet, kann die Verbrennungskraftmaschine ausgekoppelt werden. Ein Fahrer kann entsprechend benachrichtigt werden und das Fahrzeug mit der zusätzlichen Antriebsvorrichtung als eigenständigem Antrieb weiterbewegen, beispielsweise in eine Werkstatt oder zu einer Tankstelle.

Das Erhalten des Drehzahlsignals und/oder des Kurbelwellenwinkelsignals kann das Empfangen des Drehzahlsignals und/oder des Kurbelwellenwinkelsignals beispielsweise von einer Messeinrichtung oder von einer Verarbeitungseinrichtung umfassen. Das Erhalten des Drehzahlsignals und/oder des Kurbelwellenwinkelsignals kann zusätzlich das Messen des Drehzahlsignals und/oder des Kurbelwellenwinkelsignals mittels der Messeinrichtung und/oder das Umwandeln von gemessenen Drehzahlsignalen und/oder Kurbelwellenwinkelsignalen mittels der Verarbeitungseinrichtung beispielsweise in einen oder mehrere Datenströme enthalten.

Das Drehzahlsignal und/oder das Kurbelwellenwinkelsignal können von einer oder mehreren Messeinrichtungen bereitgestellt sein. Zum Beispiel werden das Drehzahlsignal und das Kurbelwellenwinkelsignal von je einer Messeinrichtung oder von einer gemeinsamen Messeinrichtung empfangen. Wird das Drehzahlsignal und das Kurbelwellenwinkelsignal von einer gemeinsamen Messeinrichtung geliefert, können das Drehzahlsignal und das Kurbelwellenwinkelsignal als ein einziges Signal von der Messeinrichtung zur Verfügung gestellt sein. Das Drehzahlsignal und/oder das Kurbelwellenwinkelsignal können auch von einer Verarbeitungseinrichtung bereitgestellt sein.

Die Messeinrichtung kann ein Drehzahlsensor sein, beispielsweise ein magnetostatischer Drehzahlsensor. Der magnetostatische Drehzahlsensor kann zum Beispiel ein Geberrad mit einer Mehrzahl an magnetischen Segmenten oder Zähnen und einen Magnetfeldsensor, beispielsweise einen Hallsensor, aufweisen. Das Geberrad kann an einer beliebigen Position der Kurbelwelle befestigt sein, beispielsweise zwischen zwei Zylindern der Verbrennungskraftmaschine oder zwischen der Verbrennungskraftmaschine und einer Trennkupplung, über die die Verbrennungskraftmaschine mit der zusätzlichen Antriebsvorrichtung verbunden ist. In manchen Ausführungsbeispielen kann das Geberrad zwischen der Verbrennungskraftmaschine und dem Trennelement angeordnet sein und zwischen dem Geberrad und der Trennkupplung ein Zweimassenschwungrad an der Kurbelwelle befestigt sein. Das Zweimassenschwungrad kann für eine Erkennungsfunktionalität des Verbrennungsvorgangs insofern von Bedeutung sein, als dass es die Schwingungen auf der Kurbelwelle und daher auch das hochaufgelöste Drehzahlsignals beeinflusst. Die Verarbeitungseinrichtung kann einen Mikroprozessor aufweisen. Zum Beispiel kann die Verarbeitungseinrichtung in eine Motorsteuerung integriert sein.

Für das Ermitteln, ob in der Verbrennungskraftmaschine eine Verbrennung stattfindet, können das Drehzahlsignal und/oder das Kurbelwellenwinkelsignal in Form eines Datenstroms vorliegen. Das Drehzahlsignal kann in Abhängigkeit der Zeit, der magnetischen Segmente oder Zähne des Geberrads des Drehzahlsensors oder des Kurbelwellenwinkels bereitgestellt sein. Das Kurbelwellenwinkelsignal kann in Abhängigkeit der Zeit oder der Drehzahl zur Verfügung stehen. Vorzugsweise liegt das Drehzahlsignal in Abhängigkeit vom Kurbelwellenwinkel vor. Alternativ können das Drehzahlsignal und das Kurbelwellenwinkelsignal beide in Abhängigkeit von der Zeit bereitgestellt sein.

Gemäß dem erfindungsgemäßen Verfahren kann beim Ermitteln, ob eine Verbrennung stattfindet, auf Grundlage des Drehzahlsignals eine Drehzahl oder ein Drehzahlbereich bestimmt werden. Anschließend kann auf Grundlage des Kurbelwellenwinkelsignals und der bestimmten Drehzahl bzw. des bestimmten Drehzahlbereichs ein Kurbelwellenwinkel, ein Kurbelwellenwinkelbereich oder ein Kurbelwellenwinkelabstand bestimmt werden. Auf Grundlage des bestimmten, der bestimmten Drehzahl oder dem bestimmten Drehzahlbereich zugehörigen Kurbelwellenwinkels oder des bestimmten, der bestimmten Drehzahl oder dem bestimmten Drehzahlbereich zugehörigen Kurbelwellenwinkelbereichs oder -abstands kann dann erkannt werden, ob in der Verbrennungskraftmaschine eine Verbrennung stattfindet.

Alternativ kann beim Ermitteln, ob eine Verbrennung stattfindet, auf Grundlage des Kurbelwellenwinkelsignals ein Kurbelwellenwinkel oder ein Kurbelwellenwinkelbereich bestimmt werden. Anschließend kann auf Grundlage des Drehzahlsignals und des bestimmten Kurbelwellenwinkels bzw. des bestimmten Kurbelwellenwinkelbereichs eine Drehzahl oder ein Drehzahlbereich bestimmt werden. Auf Grundlage der bestimmten, dem bestimmten Kurbelwellenwinkel oder dem bestimmten Kurbelwellenwinkelbereich zugehörigen Drehzahl oder des bestimmten, dem bestimmten Kurbelwellenwinkel oder dem bestimmten Kurbelwellenwinkelbereich zugehörigen Drehzahlbereichs kann dann erkannt werden, ob eine Verbrennung stattfindet.

Da in herkömmlichen Kraftfahrzeugen für andere Anwendungen bereits ein Drehzahlsignal und ein Kurbelwellenwinkelsignal zur Verfügung stehen, können das vorhandene Drehzahlsignal und das vorhandene Kurbelwellenwinkelsignal zum Ermitteln, ob eine Verbrennung stattfindet, verwendet werden und es sind daher keine oder nur geringfügige Veränderungen der Hardware eines Kraftfahrzeugs notwendig.

Nachfolgend wird die Ermittlung auf Grundlage des bestimmten, der Drehzahl oder dem Drehzahlbereich zugehörigen Kurbelwellenwinkels oder des bestimmten, der Drehzahl oder dem Drehzahlbereich zugehörigen Kurbelwellenwinkelbereichs oder -abstands näher beschrieben. Auf die alternative Ermittlung auf Grundlage der dem Kurbelwellenwinkel bzw. dem Kurbelwellenwinkelbereich zugeordneten Drehzahl bzw. des entsprechend zugeordneten Drehzahlbereichs wird weiter unten eingegangen.

Das Ermitteln, ob eine Verbrennung stattfindet, kann das Erkennen eines Drehzahlminimums, eines Drehzahlmaximums, eines Drehzahlwendepunkts, eines Drehzahlwertebereichs und/oder einer Drehzahlverlaufsform auf Grundlage des Drehzahlsignals umfassen. Es kann auch ein anderer Drehzahlwert des Drehzahlsignals erkannt werden, bei dem das Drehzahlsignal beispielsweise eine charakteristische Steigung und/oder eine charakteristische Krümmung und/oder andere charakteristische Eigenschaften aufweist. Vorzugsweise wird eine Drehzahl oder ein Drehzahlbereich während eines Arbeitstaktes der Verbrennungskraftmaschine erkannt, da Veränderungen im Drehzahlsignal, die von der Verbrennung abhängen, während des Arbeitstaktes auffälliger sind als in anderen Takten der Verbrennungskraftmaschine. Der Arbeitstakt ist als der Takt der Verbrennungskraftmaschine zu verstehen, während dessen an einem Zylinderkolben der Verbrennungskraftmaschine Arbeit verrichtet wird.

Beispielsweise ist die auf Grundlage des Drehzahlsignals bestimmte Drehzahl das erkannte Drehzahlminimum, das erkannte Drehzahlmaximum, der erkannte Drehzahlwendepunkt oder der andere erkannte Drehzahlwert. Beim Bestimmen des Kurbelwellenwinkels kann der dem erkannten Drehzahlminimum, Drehzahlmaximum, Drehzahlwendepunkt oder Drehzahlwert zugeordnete Kurbelwellenwinkel als bestimmter Kurbelwellenwinkel festgestellt werden.

Der auf Grundlage des Drehzahlsignals bestimmte Drehzahlbereich kann alternativ ein Drehzahlwertebereich oder eine Drehzahlverlaufsform sein. Die erkannte bzw. bestimmte Drehzahlverlaufsform kann ein Ausschnitt des Drehzahlsignals sein, der beispielsweise eine Position eines Totpunkts, ein Drehzahlminimum und/oder ein Drehzahlmaximum aufweist, oder einen solchen Ausschnitt enthalten. Die Position eines Totpunkts ist beispielsweise eine Position im Drehzahlsignal, die dann erreicht ist, wenn sich ein Zylinderkolben der Verbrennungskraftmaschine an einem oberen Totpunkt im Arbeitstakt (ZOT) befindet. Das Drehzahlminimum kann ein lokales Minimum des Drehzahlsignals sein, beispielsweise ein Drehzahlminimum, das vor, bei oder nach Erreichen der Position des Totpunkts auftaucht. Das Drehzahlmaximum kann ein lokales Maximum des Drehzahlsignals sein, beispielsweise ein Drehzahlmaximum, das nach Erreichen der Position des Totpunkts auftaucht. Der Ausschnitt kann also vorzugsweise eine Drehzahlstruktur des Drehzahlsignals während des Arbeitstaktes eines Zylinderkolbens der Verbrennungskraftmaschine enthalten, da in einem solchen Abschnitt die verbrennungsabhängigen Veränderungen des Drehzahlsignals besser als während anderer Takte erkennbar sind. In manchen Ausführungsbeispielen kann der Ausschnitt aber auch eine Oszillation des Drehzahlsignals, insbesondere eine vollständige Oszillation des Drehzahlsignals, enthalten.

Beim Bestimmen des Kurbelwellenwinkelbereichs oder -abstands kann der dem erkannten Drehzahlwertebereich oder der erkannten Drehzahlverlaufsform zugeordnete Kurbelwellenwinkelbereich oder -abstand als bestimmter Kurbelwellenwinkelbereich oder - abstand festgestellt werden. Beispielsweise kann die erkannte bzw. bestimmte Drehzahlverlaufsform ein Ausschnitt sein, der eine Position des Totpunkts und ein Drehzahlminimum enthält, und als bestimmter Kurbelwellenwinkelabstand ein Winkelabstand zwischen dem Totpunkt-Kurbelwellenwinkel an der Position des Totpunktes und dem Kurbelwellenwinkel im Drehzahlminimum festgestellt wird.

Die Feststellung des bestimmten Kurbelwellenwinkels bzw. des Kurbelwellenwinkelbereichs oder -abstands kann durch Ablesen aus einem Diagramm, in dem beispielsweise das Drehzahlsignal über dem Kurbelwellenwinkel aufgetragen ist, erfolgen. Alternativ kann die Feststellung des bestimmten Kurbelwellenwinkels bzw. des Kurbelwellenwinkelbereichs oder -abstands durch Bestimmen eines Zeitpunktes, der der bestimmten Drehzahl zugeordnet ist, bzw. eines Zeitpunktbereichs oder einer Zeitspanne, die dem bestimmten Drehzahlbereich zugeordnet ist, und durch Festlegen des bestimmten Kurbelwellenwinkels zu diesem Zeitpunkt bzw. des bestimmten Kurbelwellenwinkelbereichs während dieses Zeitpunktbereichs oder dieser Zeitspanne erfolgen.

Aus der erkannten bzw. bestimmten Drehzahlverlaufsform werden erfindungsgemäß eine Bezugsdrehzahl bestimmt und auf Grundlage der Bezugsdrehzahl der Kurbelwellenwinkel festgelegt. Nachfolgend wird ein möglicher Bestimmungsweg für die Bestimmung der Bezugsdrehzahl beschrieben.

Beispielsweise enthält der Ausschnitt der Drehzahlverlaufsform eine Position eines Totpunkts und ein der Position des Totpunkts nachfolgendes Drehzahlmaximum. Ausgehend von einer solchen Drehzahlverlaufsform kann zum Ermitteln, ob eine Verbrennung stattfindet, weiter ein maximaler Anstieg der Drehzahl ausgehend von der Position des Totpunkts bis zum Drehzahlmaximum bestimmt werden. Beispielsweise wird ein Betrag einer Differenz zwischen dem Drehzahlmaximum und einer Totpunkt-Drehzahl an der Position des Totpunkts bestimmt.

Auf Grundlage des maximalen Drehzahlanstiegs kann die Bezugsdrehzahl ermittelt werden. Die Bezugsdrehzahl ist beispielsweise die Summe aus der Totpunkt-Drehzahl und einem vorgegebenen Prozentsatz des maximalen Anstiegs, beispielsweise einem vorgegebenen Prozentsatzes eines Betrags der Differenz aus dem Drehzahlmaximum und der Totpunkt-Drehzahl. Die so bestimmte Bezugsdrehzahl ist robust. Für unterschiedliche, in Abhängigkeit von der Verbrennung der Verbrennungskraftmaschine veränderte Drehzahlsignale entsprechend bestimmte Bezugsdrehzahlen bilden eine zuverlässige Vergleichsgrundlage für die Ermittlung, ob in der Verbrennungskraftmaschine eine Verbrennung stattfindet.

Der vorgegebene Prozentsatz kann einen beliebigen Wert zwischen 0% und 100% annehmen. In manchen Ausführungsbeispielen liegt der vorgegebene Prozentsatz im Bereich von 20 % bis 40 %. Zum Beispiel kann der vorgegebene Prozentsatz ca. 27 % betragen. Je nach Struktur des Drehzahlverlaufs einer Verbrennungskraftmaschine kann der vorgegebene Prozentsatz für unterschiedliche Verbrennungskraftmaschinen unterschiedlich gewählt sein.

Steht die Bezugsdrehzahl fest, kann ein dieser Bezugsdrehzahl zugeordneter Bezugskurbelwellenwinkel bestimmt werden. Dazu kann beispielsweise das Drehzahlsignal über dem Kurbelwellenwinkel aufgetragen sein und der der Bezugsdrehzahl zugeordnete Bezugskurbelwellenwinkel abgelesen werden. Alternativ können das Drehzahlsignal und das Kurbelwellenwinkelsignal über derselben Größe, beispielsweise der Zeit, aufgetragen sein. In diesem Fall kann ein Zeitpunkt bestimmt werden, an dem die Bezugsdrehzahl auftritt, und der Kurbelwellenwinkel zu diesem Zeitpunkt bestimmt werden.

Der bestimmte Kurbelwellenwinkel kann somit entweder ein auf Grundlage der erkannten bzw. bestimmten Drehzahl direkt festgestellter Kurbelwellenwinkel oder ein auf Grundlage der Bezugsdrehzahl festgestellter Kurbelwellenwinkel sein.

Wie oben schon erwähnt, kann auch ein Kurbelwellenwinkel bestimmt werden und abhängig von dem bestimmten Kurbelwellenwinkel eine Drehzahl festgestellt werden. Zum Beispiel kann der Totpunkt-Kurbelwellenwinkel oder ein anderer charakteristischer Kurbelwellenwinkel bestimmt werden und in Abhängigkeit vom Totpunkt-Kurbelwellenwinkel oder dem anderen charakteristischen Kurbelwellenwinkel eine Drehzahl festgestellt werden. Der Totpunkt-Kurbelwellenwinkel ist der Winkel, der erreicht wird, wenn sich ein Zylinderkolben der Verbrennungskraftmaschine an einem oberen Totpunkt in einem Arbeitstakt befindet.

Gemäß dem erfindungsgemäßen Verfahren kann das Ermitteln, ob eine Verbrennung stattfindet, auf Grundlage des Drehzahlsignals und des Kurbelwellenwinkelsignals sowie auf Grundlage eines Schwellwerts oder eines Schwellwertbereichs oder -abstands erfolgen. Alternativ kann das Ermitteln, ob eine Verbrennung stattfindet, auf Grundlage des Drehzahlsignals und des Kurbelwellenwinkelsignals sowie auf Grundlage eines Totpunkt-Kurbelwellenwinkels und/oder einer Totpunkt-Drehzahl erfolgen. In manchen Ausführungsbeispielen kann das Ermitteln, ob eine Verbrennung stattfindet, auf Grundlage des Drehzahlsignals und des Kurbelwellenwinkelsignals, auf Grundlage eines Schwellwertes bzw. eines Schwellwertbereichs oder -abstands und auf Grundlage eines Totpunkt-Kurbelwellenwinkels und/oder einer Totpunkt-Drehzahl erfolgen. Der Schwellwert bzw. der Schellwertbereich oder -abstand und/oder der Totpunkt-Kurbelwellenwinkel bzw. die Totpunkt-Drehzahl können in einem Datenspeicher abgespeichert sein und bei Bedarf aufgerufen werden. Der Totpunkt-Kurbelwellenwinkel kann vom Aufbau der Messeinrichtung abhängen.

Zum Ermitteln, ob in der Verbrennungskraftmaschine eine Verbrennung stattfindet, kann der bestimmte Kurbelwellenwinkel oder der Bezugskurbelwellenwinkel mit einem Schwellwinkel verglichen werden und, wenn der bestimmte Kurbelwellenwinkel oder der Bezugskurbelwellenwinkel den Schwellwinkel überschreitet, kann erkannt werden, dass eine Verbrennung stattfindet. Entsprechend kann der bestimmte Kurbelwellenwinkelbereich oder-abstand mit einem Schwellbereich oder Schwellabstand verglichen werden und, wenn der Bezugskurbelwellenwinkelbereich oder -abstand den Schwellbereich oder den Schwellabstand überschreitet, kann erkannt werden, dass eine Verbrennung stattfindet.

Beispielsweise wird, wie oben beschrieben, mit Hilfe der bestimmten Drehzahl oder der Bezugsdrehzahl ein Kurbelwellenwinkel bestimmt. Der bestimmte Kurbelwellenwinkel kann mit einem Schwellwinkel verglichen werden und, wenn der Kurbelwellenwinkel größer als der Schwellwert ist, kann festgestellt werden, dass eine Verbrennung stattfindet. Wenn der Kurbelwellenwinkel kleiner als der Schwellwinkel oder gleich groß ist, kann festgestellt werden, dass keine oder eine ungeeignete Verbrennung stattfindet. Ist der Bezugskurbelwellenwinkel auf Basis des maximalen Anstiegs bestimmt, kann der Schwellwinkel mit steigendem Prozentsatz zunehmen. In manchen Ausführungsbeispielen kann der Schwellwert im Bereich von 1° bis 80°, insbesondere im Bereich von 22° bis 36°, zunehmen, wobei der Totpunkt-Kurbelwellenwinkel 0° beträgt. Zum Beispiel beträgt der Schwellwert ca. 24°.

Auf ähnliche Weise kann mit Hilfe eines bestimmten Drehzahlbereichs bzw. eines Drehzahlverlaufs ein Kurbelwellenwinkelbereich oder-abstand bestimmt werden und auf Basis des bestimmten Kurbelwellenwinkelbereichs und eines Schwellwertbereichs oder auf Basis des bestimmten Kurbelwellenwinkelabstands und eines Schwellabstands ermittelt werden, ob eine Verbrennung stattfindet oder nicht.

In manchen Ausführungsbeispielen kann auf Grundlage der bestimmten Drehzahl, beispielsweise des Drehzahlminimums, ein Kurbelwellenwinkel bestimmt werden. Entspricht der bestimmte Kurbelwellenwinkel in diesem Beispiel dem Totpunkt-Kurbelwellenwinkel oder unterscheidet er sich nur um wenige Grad, beispielsweise maximal 5°, von dem Totpunkt-Kurbelwellenwinkel, wird festgestellt, dass keine Verbrennung stattfindet und die Verbrennungskraftmaschine mitgeschleppt wird. Unterscheidet sich der bestimmte Kurbelwellenwinkel um mehr als 5° von dem Totpunkt-Kurbelwellenwinkel, wird bestimmt, dass eine Verbrennung stattfindet.

In manchen Ausführungsbeispielen wird wie oben beschrieben ein Winkelabstand zwischen Totpunkt-Kurbelwellenwinkel und bestimmtem Kurbelwellenwinkel bestimmt. Wenn der Winkelabstand größer als ein Schwellabstand ist, wird in diesem Beispiel bestimmt, dass eine Verbrennung in der Verbrennungskraftmaschine stattfindet, während, wenn der Winkelabstand kleiner als der Schwellabstand oder gleich dem Schwellabstand ist, wird bestimmt, dass keine oder eine ungeeignete Verbrennung stattfindet und die Verbrennungskraftmaschine mitgeschleppt wird.

Anstatt der Bestimmung einer Drehzahl und eines Kurbelwellenwinkel, um auf deren Basis zu ermitteln, ob eine Verbrennung stattfindet, kann eine Phasenverschiebung zwischen dem erhaltenen Drehzahlsignal und einem Referenzdrehzahlsignal bestimmt werden. Das Referenzdrehzahlsignal kann ein vorab ermitteltes oder simuliertes Drehzahlsignal sein, das beispielsweise eine Drehzahl während des Mitschleppens der Verbrennungskraftmaschine oder während des Brennens der Verbrennungskraftmaschine repräsentiert. Das Referenzdrehzahlsignal kann in einem Datenspeicher, beispielsweise einem Datenspeicher einer Verarbeitungseinrichtung, abgespeichert sein. Das erhaltene Drehzahlsignal und/oder das Referenzdrehzahlsignal können in Abhängigkeit vom Kurbelwellenwinkel vorliegen, wobei der Totpunkt-Kurbelwellenwinkel des erhaltenen Drehzahlsignals und des Referenzdrehzahlsignals vorzugsweise den gleichen Wert, beispielsweise 0°, beträgt.

Wie oben bereits erwähnt, kann das Drehzahlsignal und/oder das Kurbelwellenwinkelsignal ein oszillierendes Signal sein. Das Signal kann aufeinander folgende Oszillationen mit je einem Minimum und einem Maximum enthalten und während jeder Oszillation durchläuft einer der Zylinderkolben der Verbrennungskraftmaschine einen oberen Totpunkt in einem Arbeitstakt. Das erfindungsgemäße Verfahren kann für mehrere aufeinanderfolgende oder ausgewählte Ausschnitte oder Oszillationen während des Betriebs des Hybridfahrzeugs durchgeführt werden, um während des Betriebs des Hybridfahrzeugs, beispielsweise während des Leerlaufs und/oder unter unterschiedlichen Lasten, die Funktionsfähigkeit der Verbrennungskraftmaschine überprüfen zu können.

Da es während des Betriebs des Hybridfahrzeugs zu kurzfristigen Signalschwankungen kommen kann, die nicht damit in Zusammenhang stehen, ob allgemein eine Verbrennung stattfindet oder nicht, kann ein Fenster mit einer Vielzahl an Oszillationen ausgewählt werden. Für jede Oszillation kann, wie oben beschrieben, einzeln ermittelt werden, ob eine Verbrennung stattfindet. Auf Grundlage der so ermittelten Ergebnisse kann trotz einzelner Unregelmäßigkeiten mit erhöhter Zuverlässigkeit festgelegt werden, dass eine Verbrennung stattfindet oder nicht. Beispielsweise können die ermittelten Ergebnisse miteinander verglichen werden. Wenn ein Bruchteil der ermittelten Ergebnisse nicht mit dem Großteil der Ergebnisse übereinstimmt, kann der Bruchteil der Ergebnisse verworfen werden und als Ergebnis das Ergebnis ausgegeben werden, das durch den Großteil der ermittelten Ergebnisse bestätigt wird. Unter Großteil ist hier ein Anteil von mehr als 70 %, insbesondere mehr als 90 %, insbesondere mehr als 95% der ermittelten Ergebnisse zu verstehen, unter Bruchteil der verbleibende Rest der Ergebnisse.

Ein Fenster an Oszillationen kann beispielsweise 100 bis 200 Oszillationen enthalten, z.B. 160 Oszillationen. Bei einer Drehzahl der Kurbelwelle von mehr als 800 1/min (Umdrehungen pro Minute), die beim Betrieb eines Hybridfahrzeugs üblicherweise erreicht werden, kann somit innerhalb von wenigen Sekunden zuverlässig ein Ausfall der Verbrennungskraftmaschine erkannt werden.

Das Fenster kann sich mit der Zeit verschieben, um während eines längeren Zeitraums, beispielsweise während des ganzen Betriebs des Hybridfahrzeugs, zuverlässig ermitteln zu können, ob die Verbrennungskraftmaschine selbständig läuft oder von der zusätzlichen Antriebsvorrichtung mitgeschleppt wird. Mit jeder Oszillation kann sich das Fenster um diese Oszillation verschieben. Nach jeder Verschiebung werden die ermittelten Ergebnisse aller Oszillationen im Fenster analysiert und es wird auf Grundlage dieser festgelegt, ob eine Verbrennung stattfindet oder nicht. Somit kann die Zuverlässigkeit des erfindungsgemäßen Verfahrens erhöht werden.

Die Situation des Mitschleppens der Verbrennungskraftmaschine durch die zusätzliche Antriebsvorrichtung kann sowohl im Stand als auch während der Fahrt erkannt werden und der Fahrer kann entsprechend benachrichtigt werden. Der Fahrer kann das Fahrzeug dann mit der zusätzlichen Antriebsvorrichtung in die Werkstatt bewegen, ohne dass es zu einem Liegenbleiben kommt. Weitere Starts der Verbrennungskraftmaschine können verboten werden, um die Entzündung von möglicherweise angesammeltem, unverbranntem Kraftstoff im Abgastrakt zu vermeiden. Zudem ist keine Hardware-Änderung (z.B. zusätzliche Sensoren) notwendig.

Gemäß dem erfindungsgemäßen Verfahren kann eine Plausibilitätsprüfung durchgeführt werden, um den Betriebsstatus der Verbrennungskraftmaschine noch zuverlässiger ermitteln zu können. Dazu kann z.B. eine Signalqualität, insbesondere innerhalb eines Fensters an Oszillationen, überprüft werden. Die Signalqualität und die ermittelten Ergebnisse, ob eine Verbrennung stattfindet oder nicht, können für eine Diagnose herangezogen werden, so dass einem Fahrer das Mitschleppen der Verbrennungskraftmaschine angezeigt werden kann, beispielsweise durch ein optisches und/oder akustisches Signal. Beispielsweise wird das Diagnoseergebnis auf einem Display des Fahrzeugs angezeigt.

Das Ergebnis, ob eine Verbrennung stattfindet, kann durch zusätzliche Messungen (Wärme, Höhe, Schlechtweg, Bauteilstreuung) statistisch abgesichert werden.

Die vorliegende Erfindung betrifft weiter einen Datenspeicher. Der Datenspeicher kann ein Computerprogramm enthalten, das Anweisungen zum Durchführen des oben beschriebenen Verfahrens aufweist. Zudem können in dem Datenspeicher Schwellwert, Schwellwertbereiche oder Schwellwertabstände und/oder Totpunkt-Kurbelwellenwinkel und/oder Totpunkt-Drehzahlen hinterlegt sein.

Die vorliegende Erfindung betrifft auch eine Steuervorrichtung zum Erkennen eines Verbrennungsvorgangs einer Verbrennungskraftmaschine eines Hybridfahrzeugs, die eine Kurbelwelle aufweist, wobei die Steuervorrichtung dazu ausgebildet ist, ein Verfahren, wie es oben beschrieben wurde, durchzuführen.

Die Steuervorrichtung kann einen oder mehrere Signaleingänge aufweisen, um ein Drehzahlsignal, das eine Drehzahl der Kurbelwelle repräsentiert, und ein Kurbelwellenwinkelsignal, das einen Kurbelwellenwinkel der Kurbelwelle repräsentiert, zu erhalten. Weiterhin kann die Steuervorrichtung einen Prozessor und einen Datenspeicher, beispielsweise den erfindungsgemäßen Datenspeicher, enthalten, um auf Grundlage des erhaltenen Drehzahlsignals und des erhaltenen Kurbelwellenwinkelsignals zu ermitteln, ob in der Verbrennungskraftmaschine eine Verbrennung stattfindet. Das Ermitteln kann wie oben beschrieben erfolgen.

Die vorliegende Erfindung betrifft weiterhin ein Hybridfahrzeug mit einer Steuervorrichtung, wie sie in den voranstehenden Abschnitten beschrieben ist, und einem Drehzahlsensor. Das Hybridfahrzeug kann zwei oder mehrere Antriebssysteme aufweisen, wobei eines der Antriebssysteme eine Verbrennungskraftmaschine ist. Das weitere Antriebssystem kann als ein Elektroantrieb ausgebildet sein.

Ausführungsbeispiele der Erfindung werden nun beispielhaft und unter Bezugnahme auf die beigefügten Zeichnungen beschrieben, in denen:
- Fig. 1: schematisch ein Ausführungsbeispiel eines Antriebsstrangs eines Hybridfahrzeugs zeigt;
- Fig. 2A, 2B: Drehzahlsignale einer Verbrennungskraftmaschine eines Hybridfahrzeugs zeigen;
- Fig. 3: ein Flussdiagramm eines erfindungsgemäßen Verfahrens zum Erkennen eines Verbrennungsvorgangs einer Verbrennungskraftmaschine darstellt;
- Fig. 4: schematisch ein Ausführungsbeispiel einer erfindungsgemäßen Steuervorrichtung zum Erkennen eines Verbrennungsvorgangs darstellt; und
- Fig. 5A, 5B: Drehzahlsignale und das Ermitteln, ob eine Verbrennung stattfindet, veranschaulichen.

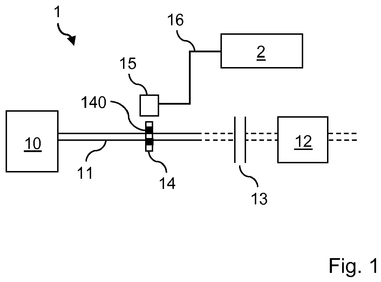

Ein Ausführungsbeispiel eines Antriebsstrangs 1 eines Hybridfahrzeugs ist in Fig. 1 gezeigt. Der Antriebsstrang 1 des Hybridfahrzeugs enthält eine Verbrennungskraftmaschine 10 mit einer Kurbelwelle 11, einen Elektroantrieb 12 und eine Trennkupplung 13, über die der Elektroantrieb 12 mit der Kurbelwelle 11 der Verbrennungskraftmaschine 10 gekoppelt ist.

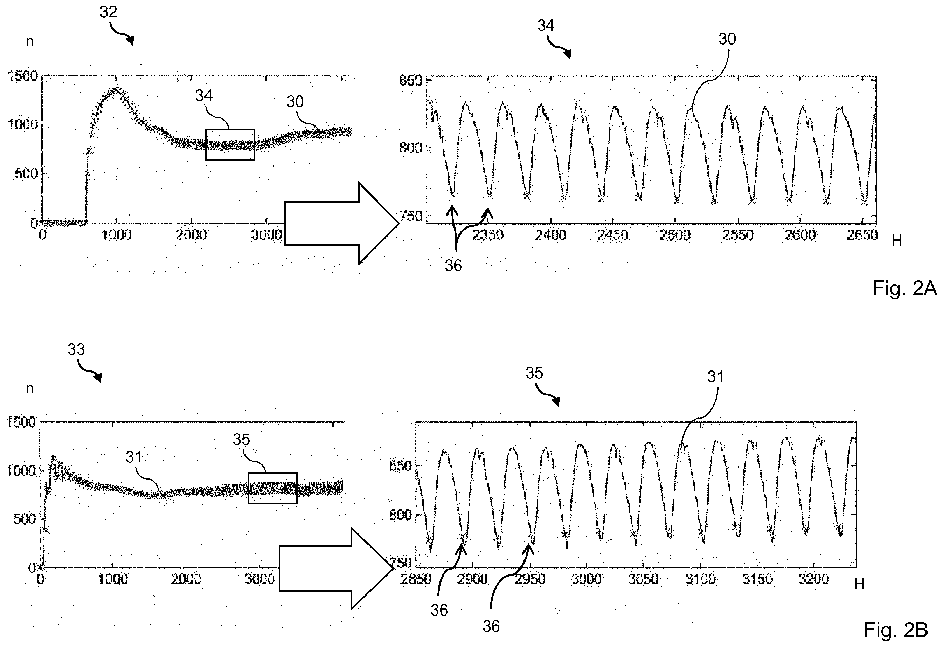

Der Antriebsstrang 1 enthält weiterhin einen Drehzahlsensor, der ein Geberrad 14 mit 58 Zähnen 140 und einen Hallsensor 15 aufweist. Das Geberrad 14 ist an der Kurbelwelle 11 zwischen der Verbrennungskraftmaschine 10 und der Trennkupplung 13 befestigt. Der Hallsensor 15 tastet das Geberrad 14 während einer Rotation der Kurbelwelle 11 ab und erzeugt ein hochaufgelöstes, oszillierendes Drehzahlsignal 30, 31, wie es in den Figuren 2A, 2B beispielhaft gezeigt ist. Das Drehzahlsignal 30, 31 des Hallsensors 15 wird über einen Datenbus 16 an eine Steuervorrichtung 2 geleitet.

Die Figuren 2A und 2B zeigen links jeweils ein Diagramm 32, 33, in dem eine Drehzahl n der Verbrennungskraftmaschine 10 über einem Index H, der von der Beschaffenheit des Geberrads 14 des Drehzahlsensors abhängt, als das Drehzahlsignal 30, 31 aufgetragen ist. Rechts zeigen die Figuren 2A und 2B jeweils einen vergrößerten Ausschnitt 34, 35 des Drehzahlsignals 30, 31, wobei Positionen der Totpunkte 36 ergänzt sind, bei denen sich einer der Zylinderkolben der Verbrennungskraftmaschine im Arbeitstakt am oberen Totpunkt befindet. Das in Figur 2A gezeigte Drehzahlsignal 30 ist ein typisches Drehzahlsignal der Verbrennungskraftmaschine 10, während diese von dem Elektroantrieb 12 mitgeschleppt wird, was sich darin zeigt, dass sich die Koordinaten der Totpunkte 36 in den Minima des Drehzahlsignals 30 befinden. Das in Figur 2B gezeigte Drehzahlsignal 31 ist ein typisches Drehzahlsignal der Verbrennungskraftmaschine 10, während diese selbständig läuft, was sich darin zeigt, dass die Positionen der Totpunkte 36 aus den Minima des Drehzahlsignals 31 verschoben sind. Die Drehzahlsignale 30, 31 steigen nach dem Start bei H ≈ 700 für Drehzahlsignal 30 und bei H ≈ 100 für Drehzahl 31 schnell stark an und pendeln sich anschließend bei H ≈ 1400 für Drehzahlsignal 30 und bei H ≈ 700 für Drehzahl 31 auf eine angeforderte Drehzahl, in den Figuren 2A und 2B eine Leerlaufdrehzahl im Bereich von 800 1/min, ein.

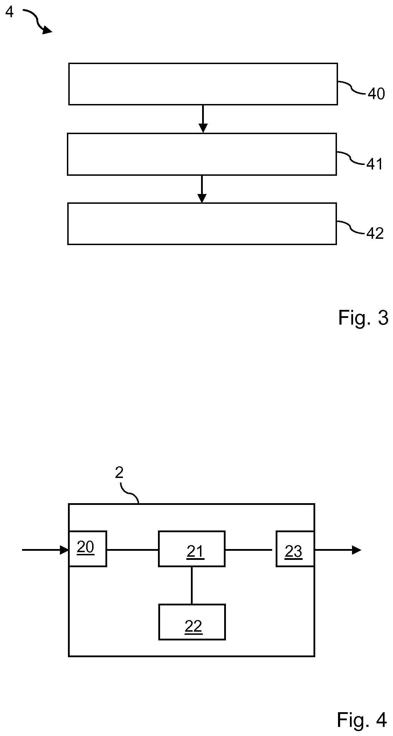

Die Steuervorrichtung 2 ist dazu ausgebildet, ein Verfahren 4 zum Erkennen eines Verbrennungsvorgangs der Verbrennungskraftmaschine 10 auszuführen, wie es im Flussdiagramm in Figur 3 gezeigt ist. Bei 40 wird ein Drehzahlsignal 30, 31, das eine Drehzahl n der Kurbelwelle 11 repräsentiert, erhalten. Bei 41 wird ein Kurbelwellenwinkelsignal, das einen Kurbelwellenwinkel ϕ der Kurbelwelle 11 repräsentiert, erhalten. Bei 42 wird auf Grundlage des Drehzahlsignals 30, 31 und des Kurbelwellenwinkelsignals ermittelt, ob in der Verbrennungskraftmaschine 10 eine Verbrennung stattfindet.

Zum Ausführen des Verfahrens 4 zum Erkennen eines Verbrennungsvorgangs der Verbrennungskraftmaschine enthält die Steuervorrichtung 2, wie in Fig. 4 gezeigt, einen Signaleingang 20, der mit dem Datenbus 16 verbindbar ist und über den die Steuervorrichtung 2 das Drehzahlsignal 30, 31 empfängt. Die Steuervorrichtung 2 enthält weiter einen Prozessor 21, der mit dem Signaleingang 20 verbunden ist, eine Speichereinrichtung 22, die mit dem Prozessor 21 verbunden ist, und einen Signalausgang 23, der mit dem Prozessor 21 verbunden ist.

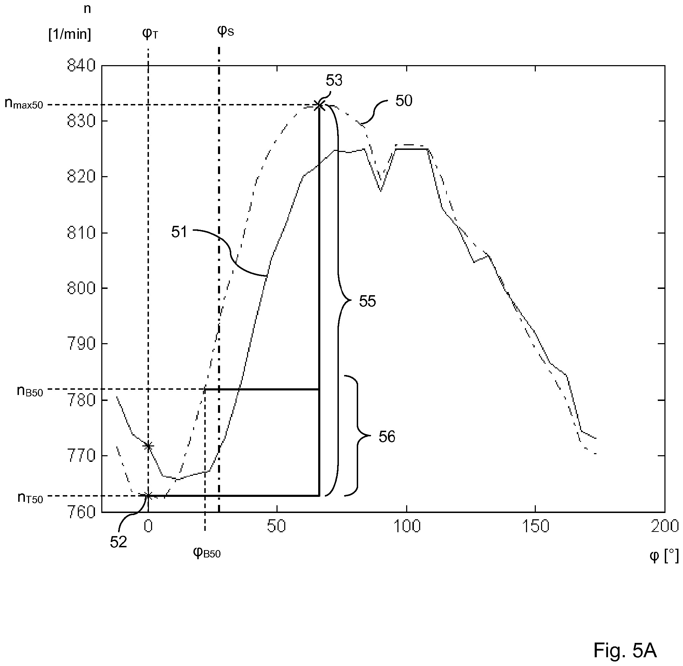

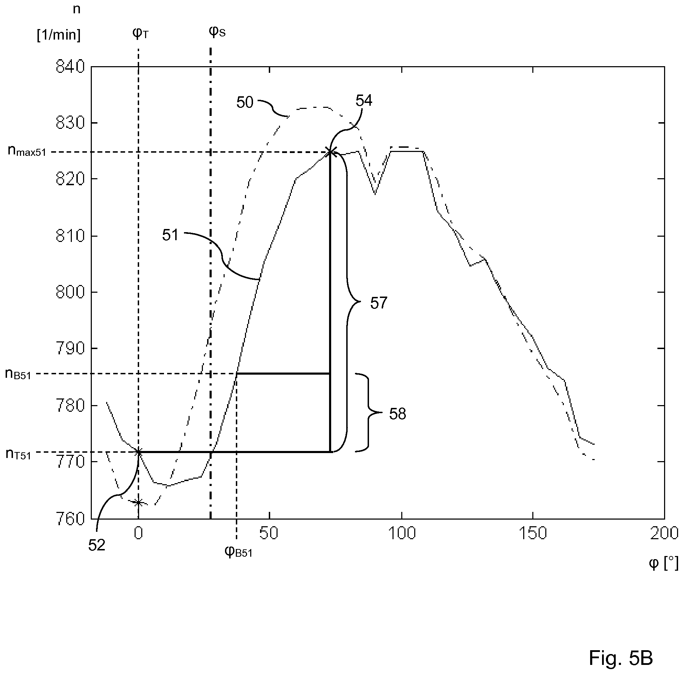

Am Signaleingang 20 wird das Drehzahlsignal 30, 31 empfangen und an den Prozessor 21 weitergeleitet. Zudem wird am Signaleingang 20 eine Information über das Geberrad 14 des Drehzahlsensors, die ein Verhältnis des Index H zum Kurbelwellenwinkel angibt, als Kurbelwellenwinkelsignal empfangen. Das Drehzahlsignal 30, 31 und das Kurbelwellenwinkelsignal werden dem Prozessor 21 zugeleitet. Der Prozessor 21 wandelt das Drehzahlsignal 30, 31 auf Basis des Kurbelwellenwinkelsignals in ein Drehzahlsignal 50, 51 in Abhängigkeit vom Kurbelwellenwinkel, wie es in den Figuren 5A und 5B gezeigt ist, um und analysiert dieses.

Bei der Analyse des Drehzahlsignals 50, 51 werden Positionen der Totpunkte 52 bestimmt, indem eine einem Totpunkt-Kurbelwellenwinkel ϕ_{T} zugeordnete Drehzahl n_{T} ermittelt wird, wobei der Totpunkt-Kurbelwellenwinkel ϕ_{T} im vorliegenden Ausführungsbeispiel auf 0° festgesetzt ist. Für das Drehzahlsignal 50 beträgt die Drehzahl n_{T50} ca. 763 1/min, für das Drehzahlsignal 51 beträgt die Drehzahl n_{T51} ca. 772 1/min. Außerdem wird ein auf die Positionen der Totpunkte 52 folgendes Drehzahlmaximum 53, 54 bestimmt und die zugehörige Drehzahl nₘₐₓ ermittelt. Für das Drehzahlsignal 50 beträgt die Drehzahl nₘₐₓ₅₀ ca. 832 1/min, für das Drehzahlsignal 51 beträgt die Drehzahl nₘₐₓ₅₁ ca. 825 1/min.

Auf Grundlage der Drehzahl n_{T50} und der Drehzahl nₘₐₓ₅₀ wird für das Drehzahlsignal 50 ein maximaler Anstieg der Drehzahl bestimmt, indem die Differenz 55 zwischen den Drehzahlen nₘₐₓ₅₀ und n_{T50} (nₘₐₓ₅₀-n_{T50}) berechnet wird. Anschließend wird ein Anteil 56 der Differenz 55 berechnet, der 27% der Differenz 55 entspricht, und zur Drehzahl n_{T50} addiert, um eine Bezugsdrehzahl n_{B50} zu erhalten. Zu der Bezugsdrehzahl n_{B50} wird ein zugeordneter Bezugskurbelwellenwinkel ϕ_{B50} bestimmt. Um zu erkennen, ob in der Verbrennungskraftmaschine 10 eine Verbrennung stattfindet, wird der Bezugskurbelwellenwinkel ϕ_{B50} mit einem Schwellwinkel ϕₛ verglichen. Da der Bezugskurbelwellenwinkel ϕ_{B50} kleiner als der Schwellwinkel ϕₛ ist, wird bestimmt, dass keine Verbrennung stattfindet und die Verbrennungskraftmaschine 10 von dem Elektroantrieb 12 mitgeschleppt wird.

Entsprechend wird für das Drehzahlsignal 51 auf Grundlage der Drehzahl n_{T51} und der Drehzahl nₘₐₓ₅₁ ein maximaler Anstieg der Drehzahl bestimmt, indem die Differenz 57 zwischen den Drehzahlen nₘₐₓ₅₁ und n_{T51} (nₘₐₓ₅₁-n_{T51}) berechnet wird. Anschließend wird ein Anteil 58 der Differenz 57 berechnet, der 27% der Differenz 57 entspricht, und zur Drehzahl n_{T51} addiert, um eine Bezugsdrehzahl n_{B51} zu erhalten. Zu der Bezugsdrehzahl n_{B51} wird ein zugeordneter Bezugskurbelwellenwinkel ϕ_{B51} bestimmt. Dieser Bezugskurbelwellenwinkel ϕ_{B51} wird mit dem Schwellwinkel ϕ_{S} verglichen. Da der Bezugskurbelwellenwinkel ϕ_{B51} größer als der Schwellwinkel ϕ_{S} ist, wird bestimmt, dass eine Verbrennung stattfindet und die Verbrennungskraftmaschine 10 selbstständig läuft.

In einem weiteren Ausführungsbeispiel einer Steuervorrichtung ist die Steuervorrichtung ähnlich der Steuervorrichtung 2 in Fig. 4 ausgebildet. Zusätzlich ist die Steuervorrichtung dazu ausgebildet, einen Start der Verbrennungskraftmaschine 10 zu erkennen und den Vorgang des Ermittelns, ob eine Verbrennung stattfindet, zu starten. Die Steuervorrichtung 2 führt nach dem Erkennen des Starts der Verbrennungskraftmaschine eine Qualitätsanalyse des empfangenen Drehzahlsignals 30, 31 durch und legt das Ergebnis der Qualitätsanalyse beim Ermitteln, ob eine Verbrennung stattfindet, zugrunde. Auf Grundlage der Ergebnisse der Qualitätsanalyse und der Ermittlung, ob eine Verbrennung stattfindet, führt die Steuervorrichtung eine Diagnose durch und erzeugt ein Diagnosesignal, um dem Fahrer, falls die Verbrennungskraftmaschine ausgefallen ist, anzuzeigen, dass er eine Werkstatt aufsuchen soll, und um einen Wiederstart der Verbrennungskraftmaschine gegebenenfalls zu unterbinden.

Mit Hilfe des erfindungsgemäßen Verfahrens und der Vorrichtung zum Erkennen eines Verbrennungsvorgangs einer Verbrennungskraftmaschine eines Hybridfahrzeugs kann sowohl im Stand als auch während der Fahrt ein Mitschleppen der Verbrennungskraftmaschine durch den Elektroantrieb zuverlässig erkannt werden. Es wird dadurch möglich, Vorkehrungen zu treffen, um ein Liegenbleiben und/oder einen Schaden an der Verbrennungskraftmaschine zu vermeiden. Dabei ist es nicht nötig, zusätzliche Hardware zu installieren, sondern es kann auf das Signal eines bereits vorhandenen Drehzahlsensors zurückgegriffen werden.

### Bezugszeichenliste

- 1: Antriebsstrang
- 10: Verbrennungskraftmaschine
- 11: Kurbelwelle
- 12: Elektroantrieb
- 13: Trennkupplung
- 14: Geberrad
- 140: Zähne des Geberrads
- 15: Hallsensor
- 16: Datenbus
- 2: Steuervorrichtung
- 20: Signaleingang
- 21: Prozessor
- 22: Speichereinrichtung
- 23: Signalausgang
- 30, 31: Drehzahlsignal
- 32, 33: Diagramm
- 34, 35: vergrößerter Ausschnitt
- 36: Position der Totpunkte
- 4: Verfahren zum Erkennen eines Verbrennungsvorgangs
- 40: Erhalten eines Drehzahlsignals
- 41: Erhalten eines Kurbelwellenwinkelsignals
- 42: Ermitteln, ob eine Verbrennung stattfindet
- 50, 51: Drehzahlsignal
- 52: Position der Totpunkte
- 53, 54: Drehzahlmaximum
- 55, 57: Differenz
- 56, 58: Anteil der Differenz
- H: Index
- n: Drehzahl
- nₘₐₓ₅₀, nₘₐₓ₅₁: Drehzahl am Maximum des Drehzahlsignals 50, 51
- n_{B50}, n_{B51}: Bezugsdrehzahl des Drehzahlsignals 50, 51
- n_{T50}, n_{T51}: Totpunkt-Drehzahl des Drehzahlsignals 50, 51
- ϕ: Kurbelwellenwinkel
- ϕ_{T}: Totpunkt-Kurbelwellenwinkel
- ϕ_{B50}, ϕ_{B51}: Bezugspunktkurbelwellenwinkel des Drehzahlsignals 50, 51
- ϕ_{S}: Schwellwinkel

## Patentansprüche

1. Verfahren zum Erkennen eines Verbrennungsvorgangs einer Verbrennungskraftmaschine (10) eines Hybridfahrzeugs, die eine Kurbelwelle (11) aufweist, umfassend:
Erhalten (40) eines Drehzahlsignals (30, 31), das eine Drehzahl der Kurbelwelle (11) repräsentiert;
Erhalten (41) eines Kurbelwellenwinkelsignals, das einen Kurbelwellenwinkel der Kurbelwelle (11) repräsentiert; und
Ermitteln (42) auf Grundlage des Drehzahlsignals (30,31) und des Kurbelwellenwinkelsignals, ob in der Verbrennungskraftmaschine (10) eine Verbrennung stattfindet, wobei das Ermitteln (42) das Erkennen einer Drehzahlverlaufsform, die eine Totpunkt-Drehzahl (n_{T50}, n_{T51}), die erreicht wird, wenn sich ein Zylinderkolben der Verbrennungskraftmaschine (10) in einem Arbeitstakt an einem oberen Totpunkt befindet, und ein Drehzahlmaximum (53, 54) enthält, auf Grundlage des Drehzahlsignals und das Bestimmen eines maximalen Anstiegs der Drehzahl ausgehend von der Totpunkt-Drehzahl (n_{T50}, n_{T51}) bis zum Drehzahlmaximum (53, 54) umfasst,
**dadurch gekennzeichnet, dass**
das Ermitteln (42) weiter das Bestimmen einer Bezugsdrehzahl (n_{B50}, n_{B51}), bei der ein vorgegebener Prozentsatz des maximalen Anstiegs erreicht ist, und das Bestimmen eines der Bezugsdrehzahl (n_{B50}, n_{B51}) zugeordneten Bezugskurbelwellenwinkels (ϕ_{B50},ϕ_{B51}) umfasst, und
das Ermitteln (42), ob eine Verbrennung stattfindet, auf Grundlage eines Schwellwinkels (ϕ_{S}) erfolgt, der Bezugskurbelwellenwinkel (ϕ_{B50},ϕ_{B51}) mit dem Schwellwinkel (ϕ_{S}) verglichen wird und erkannt wird, dass eine Verbrennung stattfindet, wenn der Bezugskurbelwellenwinkel (ϕ_{B50},ϕ_{B51}) den Schwellwinkel (ϕ_{S}) überschreitet.

2. Verfahren nach Anspruch 1, wobei
das Ermitteln (42) das Bestimmen einer Drehzahl oder eines Drehzahlbereichs und das Bestimmen eines Kurbelwellenwinkels oder eines Kurbelwellenwinkelbereichs auf Grundlage der bestimmten Drehzahl oder des bestimmten Drehzahlbereichs umfasst, oder wobei
das Ermitteln (42) das Bestimmen eines Kurbelwellenwinkels oder eines Kurbelwellenwinkelbereichs und das Bestimmen einer Drehzahl oder eines Drehzahlbereichs auf Grundlage des bestimmten Kurbelwellenwinkels oder des bestimmten Kurbelwellenwinkelbereichs umfasst.

3. Verfahren nach Anspruch 1 oder 2, wobei
das Ermitteln (42) das Erkennen eines Drehzahlminimums, eines Drehzahlmaximums, eines Drehzahlwendepunkts und/oder eines Drehzahlwertebereichs auf Grundlage des Drehzahlsignals umfasst.

4. Verfahren nach Anspruch 1, wobei
erkannt wird, dass keine Verbrennung stattfindet, wenn der Bezugskurbelwellenwinkel (ϕ_{B50},ϕ_{B51}) kleiner als der Schwellwinkel (ϕ_{S}) ist.

5. Verfahren nach Anspruch 4, wobei
ein Fahrer des Hybridfahrzeugs benachrichtigt wird.

6. Verfahren nach Anspruch 4 oder 5, wobei
die Verbrennungskraftmaschine ausgekoppelt wird und/oder das Fahrzeug mit einer zusätzlichen Antriebsvorrichtung als eigenständigem Antrieb weiterbewegt wird.

7. Verfahren nach Anspruch 1, wobei der vorgegebene Prozentsatz ein beliebiger Prozentsatz zwischen 20% und 40% des maximalen Anstiegs ist.

8. Datenspeicher, der ein Computerprogramm enthält, das Anweisungen zum Durchführen eines Verfahrens gemäß einem der vorhergehenden Ansprüche aufweist.

9. Steuervorrichtung (2) zum Erkennen eines Verbrennungsvorgangs einer Verbrennungskraftmaschine (10) eines Hybridfahrzeugs, die eine Kurbelwelle (11) aufweist, wobei die Steuervorrichtung (2) dazu ausgebildet ist, ein Verfahren (4) nach einem der vorhergehenden Ansprüche 1-7 durchzuführen.

10. Hybridfahrzeug mit zwei oder mehreren Antriebssytemen und einem Drehzahlsensor, wobei eines der Antriebssysteme eine Verbrennungskraftmaschine und eines als ein Elektroantrieb ausgebildet ist, **gekennzeichnet durch** eine Steuervorrichtung (2) gemäß Anspruch 9.

## Claims

1. Method for detecting a combustion process in an internal combustion engine (10), which has a crankshaft (11), of a hybrid vehicle, comprising:
acquiring (40) a rotational speed signal (30, 31) which represents a rotational speed of the crankshaft (11) ;
acquiring (41) a crankshaft angle signal which represents a crankshaft angle of the crankshaft (11); and
determining (42), on the basis of the rotational speed signal (30, 31) and the crankshaft angle signal, whether combustion is taking place in the internal combustion engine (10),
wherein the determining (42) comprises detecting, on the basis of the rotational speed signal, a rotational speed profile which contains a dead centre rotational speed (n_{T50}, n_{T51}), which is reached when a cylinder piston of the internal combustion engine (10) is at a top dead centre in a working stroke, and a rotational speed maximum (53, 54), and determining a maximum increase in the rotational speed from the dead centre rotational speed (n_{T50}, n_{T51}) up to the rotational speed maximum (53, 54),
**characterized in that**
the determining (42) also comprises determining a reference rotational speed (n_{B50}, n_{B51}) at which a predefined percentage of the maximum increase is reached, and determining a reference crankshaft angle (ϕ_{B50,} ϕ_{B51}) which is associated with the reference rotational speed (n_{B50}, n_{B51}), and the determining (42) of whether combustion is taking place is carried out on the basis of a threshold angle (ϕ_{S}) the reference crankshaft angle (ϕ_{B50}, ϕ_{B51}) is compared with the threshold angle (ϕ_{S}) and it is detected that combustion is taking place when the reference crankshaft angle (ϕ_{B50}, ϕ_{B51}) exceeds the threshold angle (ϕ_{S}).

2. Method according to Claim 1, wherein
the determining (42) comprises determining a rotational speed or a rotational speed range and determining a crankshaft angle or a crankshaft angle range on the basis of the determined rotational speed or the determined rotational speed range, or wherein
the determining (42) comprises determining a crankshaft angle or a crankshaft angle range and determining a rotational speed or a rotational speed range on the basis of the determined crankshaft angle or the determined crankshaft angle range.

3. Method according to Claim 1 or 2, wherein
the determining (42) comprises detecting a rotational speed minimum, a rotational speed maximum, a rotational speed inflection point and/or a rotational speed value range on the basis of the rotational speed signal.

4. Method according to Claim 1, wherein
it is detected that no combustion is taking place if the reference crankshaft angle (ϕ_{B50}, ϕ_{B51}) is smaller than the threshold angle (ϕ_{S}).

5. Method according to Claim 4, wherein
a driver of the hybrid vehicle is informed.

6. Method according to Claim 4 or 5, wherein
the internal combustion engine is uncoupled and/or the vehicle is caused to continue to move with an additional drive device as an independent drive.

7. Method according to Claim 1, wherein the predefined percentage is any desired percentage between 20% and 40% of the maximum increase.

8. Data memory which comprises a computer program which has commands for carrying out a method according to one of the preceding claims.

9. Controller (2) for detecting a combustion process in an internal combustion engine (10) of a hybrid vehicle, which internal combustion engine (10) has a crankshaft (11), wherein the controller (2) is designed to carry out a method (4) according to one of the preceding Claims 1-7.

10. Hybrid vehicle having two or more drive systems and having a rotational speed sensor, wherein one of the drive systems is an internal combustion engine and one is formed as an electric drive, **characterized by** a controller (2) according to Claim 9.

## Revendications

1. Procédé pour détecter un processus de combustion d'un moteur à combustion interne (10) d'un véhicule hybride, lequel moteur à combustion interne possède un vilebrequin (11), comprenant :
obtention (40) d'un signal de vitesse de rotation (30, 31) qui représente une vitesse de rotation du vilebrequin (11) ;
obtention (41) d'un signal d'angle de vilebrequin qui représente un angle de vilebrequin du vilebrequin (11) ; et
détermination (42), sur la base du signal de vitesse de rotation (30, 31) et du signal d'angle de vilebrequin, si une combustion a lieu dans le moteur à combustion interne (10), la détermination (42) comprenant la détection d'une courbe de vitesse de rotation, laquelle contient une vitesse de rotation de point mort (n_{T50}, n_{T51}) qui est atteinte lorsqu'un piston de cylindre du moteur à combustion interne (10) se trouve au niveau d'un point mort haut dans un cycle de travail et une vitesse de rotation maximale (53, 54), en se basant sur le signal de vitesse de rotation et la détermination d'une augmentation maximale de la vitesse de rotation à partir de la vitesse de rotation de point mort (n_{T50}, n_{T51}) jusqu'à la vitesse de rotation maximale (53, 54),
**caractérisé en ce que**
la détermination (42) comprend en outre la détermination d'une vitesse de rotation de référence (n_{B50}, n_{B51}) à laquelle un pourcentage prédéfini de l'augmentation maximale est atteint, et la détermination d'un angle de vilebrequin de référence (ϕ_{B50}, ϕ_{B51}) associé à la vitesse de rotation de référence (n_{B50}, n_{B51}), et
la détermination (42) de la présence ou non d'une combustion est effectuée en se basant sur un angle de seuil (ϕ_{S}), l'angle de vilebrequin de référence (ϕ_{B50}, ϕ_{B51}) est comparé à l'angle de seuil (ϕ_{S}) et la présence d'une combustion est détectée lorsque l'angle de vilebrequin de référence (ϕ_{B50}, ϕ_{B51}) devient supérieur à l'angle de seuil (ϕ_{S}).

2. Procédé selon la revendication 1,
la détermination (42) comprenant la détermination d'une vitesse de rotation ou d'une plage de vitesses de rotation et la détermination d'un angle de vilebrequin ou d'une plage d'angles de vilebrequin en se basant sur la vitesse de rotation déterminée ou la plage de vitesses de rotation déterminée, ou
la détermination (42) comprenant la détermination d'un angle de vilebrequin ou d'une plage d'angles de vilebrequin et la détermination d'une vitesse de rotation ou d'une plage de vitesses de rotation en se basant sur l'angle de vilebrequin déterminé ou la plage d'angles de vilebrequin déterminée.

3. Procédé selon la revendication 1 ou 2, la détermination (42) comprenant la détection d'une vitesse de rotation minimale, d'une vitesse de rotation maximale, d'un point de retournement de la vitesse de rotation et/ou d'une plage de valeurs de la vitesse de rotation en se basant sur le signal de vitesse de rotation.

4. Procédé selon la revendication 1, la présence d'une combustion étant détectée lorsque l'angle de vilebrequin de référence (ϕ_{B50}, ϕ_{B51}) est inférieur à l'angle de seuil (ϕ_{S}).

5. Procédé selon la revendication 4, un conducteur du véhicule hybride étant notifié.

6. Procédé selon la revendication 4 ou 5, le moteur à combustion interne étant débrayé et/ou le véhicule poursuivant son déplacement avec un dispositif propulseur supplémentaire sous la forme d'un mécanisme propulseur autonome.

7. Procédé selon la revendication 1, le pourcentage prédéfini étant un pourcentage quelconque entre 20 % et 40 % de l'augmentation maximale.

8. Mémoire de données qui contient un programme informatique, lequel possède des instructions pour mettre en oeuvre un procédé selon l'une des revendications précédentes.

9. Dispositif de commande (2) pour détecter un processus de combustion d'un moteur à combustion interne (10) d'un véhicule hybride, lequel possède un vilebrequin (11), le dispositif de commande (2) étant conçu pour mettre en oeuvre un procédé (4) selon l'une des revendications précédentes 1 à 7.

10. Véhicule hybride équipé d'au moins deux systèmes de propulsion et d'un capteur de vitesse de rotation, l'un des systèmes de propulsion étant un moteur à combustion interne et l'un étant réalisé sous la forme d'un mécanisme de propulsion électrique, **caractérisé par** un dispositif de commande (2) selon la revendication 9.
